# EUROPÄISCHE PATENTANMELDUNG

(11) **EP 1 045 499 A1**
(43) Veröffentlichungstag der Anmeldung: **18.10.2000**
(21) Anmeldenummer: 00108282.5
(22) Anmeldetag: 14.04.2000
(51) Int. Cl.: H02G 1/12, B25B 7/00, H01R 43/042

(54) **Zange**

(30) Priorität: 16.04.1999 DE 29906890 U
(71) Anmelder: Connectool GmbH & Co., 32758 Detmold (DE)
(72) Erfinder: Schmode, Hartmut, 32825 Blomberg (DE)
(74) Vertreter: TER MEER STEINMEISTER & PARTNER GbR

(57) **Zusammenfassung**

Die Erfindung beschreibt eine Zange (1) zum Bearbeiten von strangförmigem Gut (46), mit einem ersten Handgriff (2) und einem zweiten Handgriff (3), die um eine gemeinsame Achse (4) relativ zueinander verschwenkbar sind, sowie mit einem ersten Arbeitsbacken (9) und einem zweiten Arbeitsbacken (10), die bei Verschwenkung der Handgriffe (2, 3) entsprechend aufeinander zu oder voneinander weg bewegbar sind. Ein jeweiliger der Arbeitsbacken (9, 10) ist sowohl am ersten als auch am zweiten Handgriff (2, 3) so gelagert, daß beide Arbeitsbacken (9, 10) bei jeder Verschwenkstellung der Handgriffe (2, 3) parallel zueinander stehen.

## Beschreibung

Die Erfindung bezieht sich allgemein auf eine Zange zum Bearbeiten von Gegenständen, und insbesondere auf eine Zange zum Bearbeiten von strangförmigem Gut.

Zangen dieser Art sind bereits allgemein bekannt. Sie weisen üblicherweise einen ersten Handgriff und einen zweiten Handgriff auf, die zum Beispiel um eine gemeinsame Achse relativ zueinander verschwenkbar sind, und besitzen ferner einen ersten Arbeitsbacken und einen zweiten Arbeitsbacken, die bei Verschwenkung der Handgriffe entsprechend aufeinander zu oder voneinander weg bewegbar sind.

Der Erfindung liegt die Aufgabe zugrunde, eine Zange der eingangs genannten Art zu schaffen, mit der sich insbesondere flachbandartiges Gut exakt bearbeiten läßt, und die darüber hinaus einen äußerst einfachen Aufbau aufweist und in der Herstellung billig ist.

Eine Zange nach der Erfindung zeichnet sich dadurch aus, daß ein jeweiliger der Arbeitsbacken sowohl am ersten als auch am zweiten Handgriff so gelagert ist, daß beide Arbeitsbacken bei jeder Verschwenkstellung der Handgriffe parallel zueinander stehen.

Infolge der Parallelität der Arbeitsbacken kann somit flachbandartiges Gut über dessen gesamten Breite gleichmäßig und damit exakt bearbeitet werden, was zu einem ausgezeichneten Arbeitsergebnis führt. Ist das flachbandartige Gut zum Beispiel ein elektrisches Flachkabel, so kann dieses mit Hilfe der erfindungsgemäßen Zange zum Beispiel gleichmäßiger zerschnitten oder gleichmäßiger abisoliert werden. Auch eine gleichmäßigere Vercrimpung über die Breite des Flachkabels ist möglich.

Der einfachere Aufbau der erfindungsgemäßen Zange resultiert im wesentlichen daher, daß beide Arbeitsbacken lediglich an den jeweiligen Handgriffen gelagert und geführt sind, was die Zahl der Teile und damit die Herstellungskosten der Zange senkt.

Um Zangen der genannten Art noch billiger herstellen zu können, wird vorgeschlagen, daß wenigstens die Handgriffe in ihrer Form bzw. Geometrie identisch ausgebildet sind. Darüber hinaus können aber auch die Arbeitsbacken eine identische Form bzw. Geometrie aufweisen. Formteile oder Arbeitsprogramme zur Herstellung der jeweiligen Handgriffe bzw. Arbeitsbacken lassen sich somit für beide der jeweiligen Elemente verwenden, was besonders vorteilhaft ist und die Produktionskosten weiter verringert. Dieses Prinzip läßt sich natürlich auch auf solche Zangen anwenden, bei denen es nicht auf eine Parallelstellung der beiden Arbeitsbacken ankommt.

In noch weiterer Fortführung dieses Prinzips ließen sich zum Beispiel auch die für die jeweiligen Arbeitsbacken vorgesehenen Haltereinrichtungen zum Halten von Bearbeitungselementen in ihrer Form bzw. Geometrie identisch ausbilden, wenn etwa an eine Abisolierstation im Zangenmaul gedacht wird, die zum Beispiel aus vier identisch aufgebauten Baugruppen bestehen kann, mit denen Bearbeitungselemente verbindbar sind, etwa Abisoliermesser oder Klemmbalken, oder dergleichen.

In Ausgestaltung der Erfindung besitzen vorzugsweise die jeweiligen Handgriffe einen die gemeinsame Achse in Richtung zum vorderen Zangenende hin überragenden und zum jeweils anderen Handgriff weisenden Lagerabschnitt, wobei jeder der Arbeitsbacken an jeweils einem solchen Lagerabschnitt sowie am anderen Handgriff in einem Bereich gelagert ist, der an der zum hinteren Zangenende weisenden Seite des genannten Lagerabschnitts liegt.

Dadurch wird eine einfache und sichere Lagerung sowie Parallelführung der Arbeitsbacken erzielt.

Der jeweilige Arbeitsbacken ist dabei am Lagerabschnitt schwenkbar gelagert und am anderen Handgriff gleitend verschiebbar gelagert. Zur schwenkbaren Lagerung des Arbeitsbackens kann der jeweilige Lagerabschnitt eine senkrecht zur Zangenebene liegende Lagerachse tragen, während zur gleitenden Verschiebbarkeit des jeweiligen Arbeitsbackens der genannte andere Handgriff wenigstens sich senkrecht zur Zangenebene erstreckende Ansätze aufweist, die In Längsnuten verlaufen, welche sich innen an den anderen Handgriff überragenden Seitenwänden des Arbeitsbackens befinden. Insbesondere durch diese Längsnuten bzw. deren Ausrichtung läßt sich in einfacher Weise die Parallelverschiebung der Arbeitsbacken aufeinander zu bzw. voneinander weg bei jeder Verschwenkstellung der Handgriffe gewährleisten.

Dabei können die Längsnuten auch in Platten verlaufen, die innen an den Seltenwänden der Arbeitsbacken befestigt sind, so daß auch eine Verstellung bzw. Justierung der Längsnuten nach Montage der Zange durch exaktere Positionierung der Platten möglich ist.

In weiterer Ausgestaltung der Erfindung tragen die Arbeitsbacken im vorderen Zangenbereich an einander gegenüberliegenden Abschnitten Bearbeitungswerkzeuge, etwa jeweils ein Schneidmesser zur Bildung einer Schneidstation, Crimpstempel und Gesenk zur Bildung einer Crimpstation oder wenigstens Abisoliermesser zur Bildung einer Abisolierstation. Auch anderes Werkzeug wäre denkbar, etwa elektrisch beheizte Einrichtungen zur Durchführung von Erhitzungs- oder Schmelzvorgängen an flachbandartigem Gut, und dergleichen.

Sofern eine Abisolierstation im Zangenmaul zwischen den Arbeitsbacken positioniert werden soll, kann nach einer weiteren Ausgestaltung der Erfindung jeder Arbeitsbacken zwei parallel zueinander verlaufende Abisoliermesser tragen, deren Messerschneiden sich bei Belastung voneinander entfernen. Damit läßt sich automatisch schon beim Schneidvorgang der abgetrennte Teil einer Leiterisolation vom Leiter wenigstens zum Teil abschieben, was später die vollständige Abnahme des abgetrennten Teils vom Leiter erheblich erleichtert.

In einer alternativen Ausführungsform kann zur Bildung der Abisolierstation jeder Arbeitsbacken aber auch nur ein Abisoliermesser und einen parallel dazu liegenden Klemmbalken tragen, derart, daß sich die Klemmbalken der beiden Arbeitsbacken gegenüberliegen, wobei sich eine pro Arbeitsbacken vorhandene Messerschneide des Abisoliermessers und eine Klemmfläche des Klemmbalkens bei Belastung voneinander entfernen. Auch dadurch wird der Abziehvorgang eines abgetrennten Teils der Leiterisolation von einem Leiter unterstützt. Vorteilhaft bei dieser Ausgestaltung ist darüber hinaus, daß nicht mehr zwei Schneidmesser pro Arbeitsbacken exakt nebeneinander ausgerichtet zu sein brauchen, um Doppelschnitte zu vermeiden.

Die Abisoliermesser bzw. Klemmbacken sind vorzugsweise um jeweils eine parallel zu ihnen verlaufende Kippachse drehbar gelagert oder, alternativ, jeweils in einem Halteblock herausnehmbar gehalten, wobei die Halteblöcke jeweils um eine parallel zum Abisoliermesser bzw. Klemmbalken verlaufende Kippachse drehbar gelagert sind. Dadurch lassen sich auf einfache Weise die pro Arbeitsbacken vorhandenen Elemente wie Abisoliermesser und Klemmbalken voneinander entfernen.

Um dies zu erreichen, bedarf es keiner zusätzlichen Antriebseinrichtung. Das Spreizen der Abisoliermesser bzw. eines aus einem Abisoliermesser und einem Klemmbalken bestehenden Paares erfolgt vielmehr unmittelbar bei Belastung dieser Elemente während des Schneidvorgangs. Zu diesem Zweck besteht zwischen den pro Arbeitsbacken vorhandenen Elementen Abisoliermesser, Klemmbalken oder Halteblöcke einerseits und den zugehörigen Kippachsen andererseits eine Überkreuz-Zuordnung. Das bedeutet, daß pro Arbeitsbacken zum Beispiel die Kippachse für einen der Halteblöcke an der diesem Halteblock abgewandten Außenseite des anderen Halteblocks liegt, und umgekehrt. Werden also die in den Halteblöcken befestigten Abisoliermesser bzw. Klemmbalken beim Abisoliervorgang beaufschlagt, drehen sich die jeweiligen Halteblöcke um ihre Kippachsen voneinander weg.

Dabei sind die Kippachsen an in Zangenlängsrichtung vor deren und hinteren Bereichen der Arbeitsbacken gelagert.

Nach Durchführung eines Schneidvorgangs müssen die Abisoliermesser, Klemmbalken bzw. Halteblöcke, auf die jetzt seitens des bearbeiteten strangförmigen Guts keine Kräfte mehr einwirken, wieder zurück in ihre Ausgangsposition gebracht werden. Hierzu können Federn verwendet werden, die die jeweiligen Elemente wieder in ihre Ausgangsposition drücken. Um diese Ausgangsposition für die genannten Elemente zu definieren, kann zwischen diesen ein Positionierungsstift eingreifen, der fest am jeweiligen Arbeitsbacken montiert ist. Durch die Federn werden dann die jeweiligen Elemente zurück gegen den Positionierungsstift gedrückt, nachdem ein Abisoliervorgang erfolgt ist, so daß sich die genannten Elemente dann automatisch wieder in ihrer Ausgangsposition befinden.

Ein Ausführungsbeispiel der Erfindung wird nachfolgend unter Bezugnahme auf die Zeichnung im einzelnen erläutert. Es zeigen:
**Figur 1** eine perspektivische Ansicht der Zange in geöffnetem Zustand;
**Figur 2** die Zange nach Figur 1 bei abgenommenem oberen Arbeitsbacken;
**Figur 3** eine perspektivische Zange in geschlossenem Zustand;
**Figur 4** die Zange nach Figur 3 bei abgenommenem oberen Arbeitsbacken; und
**Figur 5** ein Flachbandkabel in einer zur Zange gehörenden Abisolierstation, wobei die Zange selbst der Übersicht wegen fortgelassen ist.

Anhand der Zeichnung soll nun ein Ausführungsbeispiel der Erfindung näher erläutert werden. Dabei sind in sämtlichen Figuren gleiche Elemente mit den gleichen Bezugszeichen versehen.

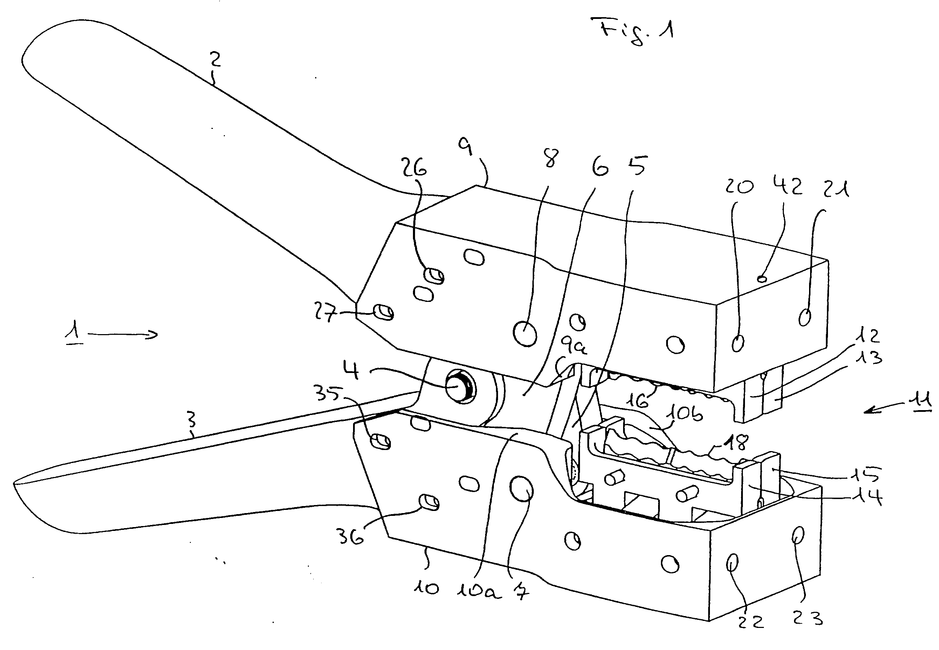

Die Figur 1 zeigt in perspektivischer Ansicht eine erfindungsgemäße Zange 1 bei geöffnetem Zangenmaul.

Die Zange 1 weist einen ersten Handgriff 2 und einen zweiten Handgriff 3 auf. Beide Handgriffe 2 und 3 sind in ihrem vorderen Bereich um eine gemeinsame Achse 4 relativ zueinander verschwenkbar. In ihrem die gemeinsame Achse 4 zum vorderen Zangenende hin überragenden Bereich weisen die Handgriffe 2 und 3 jeweils einen Lagerabschnitt 5, 6 auf, der zum jeweils anderen der Handgriffe weist. Mit anderen Worten erstreckt sich der Lagerabschnitt 5 des ersten Handgriffs 2 ein wenig in Richtung zum zweiten Handgriff 3, während sich der Lagerabschnitt 6 des zweiten Handgriffs 3 ein wenig in Richtung zum ersten Handgriff 2 erstreckt. Im Bereich dieser Lagerabschnitte 5 und 6 tragen die Handgriffe 2 und 3 jeweils eine Lagerachse 7, 8. Diese steht senkrecht zur Zangenebene, die durch die Handgriffe 2 und 3 aufgespannt ist.

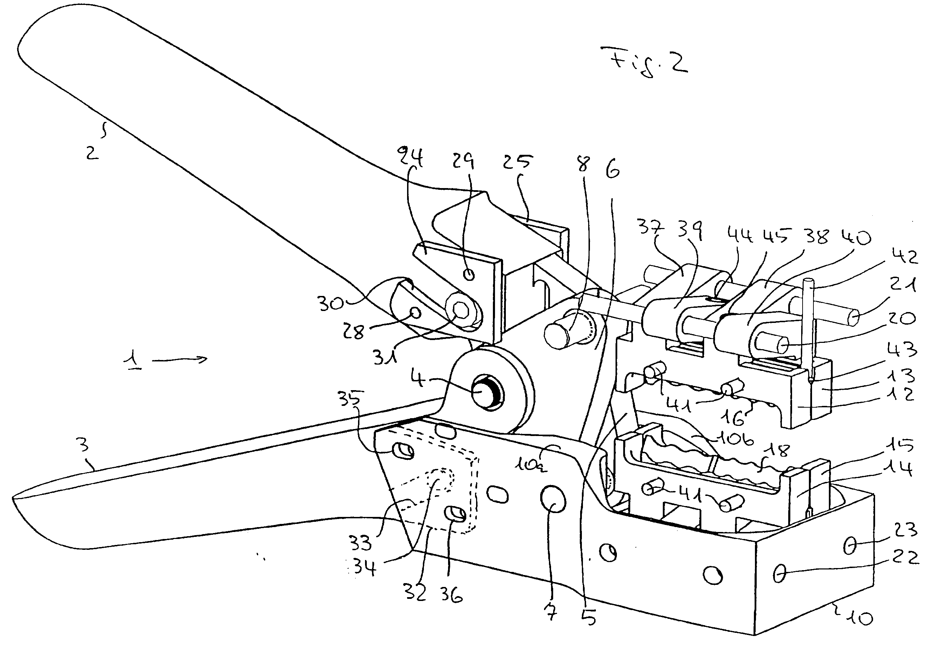

Auf den Lagerachsen 7, 8 ist jeweils ein Arbeitsbacken schwenkbar gelagert. So ist ein erster Arbeitsbacken 9 auf der Lagerachse 8 gelagert, während ein zweiter Arbeitsbacken 10 auf der Lagerachse 7 gelagert ist. Beide Arbeitsbacken 9, 10 sind halbschalenförmig ausgebildet und nehmen beide Lagerabschnitte 5, 6 zwischen zu ihnen gehörenden Seltenwänden 9a bzw. 10a, 10b auf. Diese Seitenwände 9a bzw. 10a, 10b erstrecken sich weiter in Richtung zum hinteren Zangenende und umgreifen dort die oberhalb und unterhalb der gemeinsamen Lagerachse 4 liegenden Bereiche von erstem und zweitem Handgriff 2 bzw. 3. Während also der erste Arbeitsbacken 9 über die Lagerachse 8 am zweiten Handgriff 3 schwenkbar gelagert ist, ist er weiterhin in seinem hinteren Bereich am ersten Handgriff 2 gleitend verschiebbar gelagert, wie später noch unter Bezugnahme auf Figur 2 erläutert wird. Dagegen ist der zweite Arbeitsbacken 10 über die Lagerachse 7 am ersten Handgriff 2 schwenkbar gelagert, während er in seinem zum hinteren Zangenende weisenden Bereich am zweiten Handgriff 3 gleitend verschiebbar gelagert ist, wie ebenfalls noch ausgeführt wird. Werden die Handgriffe 2 und 3 verschwenkt, so werden also einerseits die Arbeitsbacken 9 und 10 entsprechend aufeinander zu oder voneinander weg bewegt, während andererseits bei jeder Verschwenkstellung der Handgriffe 2 und 3 die Arbeitsbacken 9 und 10 parallel zueinander zu liegen kommen. Eine Verdrehung bzw. Verkippung der Arbeitsbacken 9 und 10 relativ zueinander findet nicht statt.

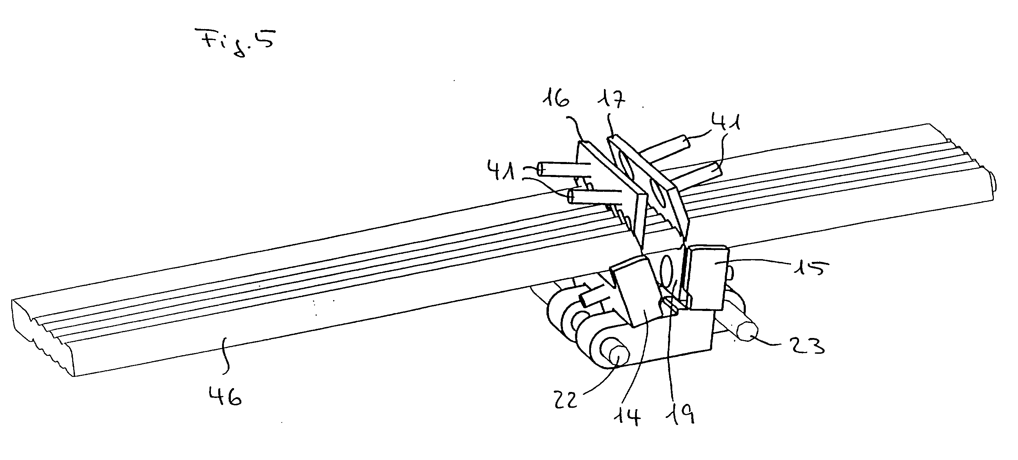

Im Bereich des am vorderen Ende der Zange 1 liegenden Zangenmauls befindet sich im vorliegenden Ausführungsbeispiel zwischen den Arbeitsbacken 9 und 10 eine Abisolierstation 11. Zu dieser Abisolierstation gehören vier Halteblöcke 12, 13, 14 und 15, von denen jeweils zwei an einem der Arbeitsbacken 9, 10 drehbar gelagert sind. Die am jeweiligen Arbeitsbacken 9, 10 drehbar gelagerten Halteblöcke 12, 13 bzw. 14, 15 sind länglich ausgeführt und erstrecken sich in Zangenlängsrichtung. Jeder der Halteblöcke 12 bis 15 nimmt ein Abisoliermesser 16, 17 bzw. 18, 19 auf, die parallel zueinander liegen und sich ebenfalls in Zangenlängsrichtung erstrecken. Die Abisoliermesser 17 und 19 sind in Figur 5 zu erkennen. Dabei liegen die Abisoliermesser 16 und 17 bzw. 18 und 19 in Ausgangsstellung der Zange 1 bei geöffnetem Zangenmaul eng aneinander, während sich die zu verschiedenen Arbeitsbacken 9 und 10 gehörenden Abisoliermesser 16, 18 bzw. 17, 19 gegenüberstehen. Sie sind entsprechend der Leiterstruktur eines abzuisolierenden Flachkabels in ihrem Schneidbereich profiliert.

Parallel zu den Halteblöcken 12, 13 im ersten Arbeitsbacken 9 sowie parallel zu den Halteblöcken 14, 15 im zweiten Arbeitsbacken 10 liegen im Innern der Arbeitsbacken Kippachsen 20, 21 bzw. 22, 23, um die die jeweiligen Halteblöcke 12, 13, 14 und 15 kippbar bzw. verschwenkbar sind. Im einzelnen ist dabei in Figur 1 der Halteblock 12 um die Kippachse 21 im Uhrzeigersinn verschwenkbar, während der Halteblock 13 um die Kippachse 20 entgegen dem Uhrzeigersinn verschwenkbar ist. Der Halteblock 14 ist um die Kippachse 23 entgegen dem Uhrzeigersinn verschwenkbar, während der Halteblock 15 um die Kippachse 22 im Uhrzeigersinn verschwenkbar ist. Die Kippachsen 20 bis 23 sind jeweils an einer vorderen Stirnfläche der Arbeitsbacken 9 und 10 befestigt sowie in deren mittleren Bereich, was nicht genauer dargestellt ist.

Die Figur 2 zeigt die erfindungsgemäße Zange bei abgenommenem ersten Arbeitsbacken 9.

Zu erkennen ist, daß sich am ersten Handgriff 2 in einem Bereich, der zum hinteren Zangenende hin kurz hinter dem Lagerabschnitt 6 bzw. der Lagerachse 8 des zweiten Handgriffs 3 zu liegen kommt, an jeweils gegenüberliegenden Seiten jeweils eine Führungsplatte befindet, die mit den Bezugszeichen 24 und 25 versehen sind. Diese Führungsplatten 24 und 25 liegen parallel zur Zangenebene und sind an den gegenüberliegenden Innenseiten des hier nicht dargestellten Arbeitsbackens 9 befestigt. Die Befestigung kann zum Beispiel dadurch erfolgen, daß durch die Öffnungen 26, 27 in Figur 1 Schrauben durch die Seitenwände 9a, 9b hindurchgeführt und in Gewindebohrungen 28, 29 eingeschraubt werden, die sich in den Führungsplatten 24, 25 befinden.

Jede der Führungsplatten 24, 25 weist darüber hinaus eine Führungsnut 30 auf, in die eine Führungsachse 31 eingreift, die senkrecht zur Zangenebene steht und am ersten Handgriff 2 befestigt ist bzw. diesen durchsetzt. Die Führungsnut 30 verläuft dabei in Figur 2 nach hinten und schräg nach oben und erlaubt dem Arbeitsbacken 9, sich beim Schließen der Handgriffe 2, 3 infolge der Bewegung der Lagerachse 8 nach vorn ebenfalls nach vorn zu bewegen. Da gleichzeitig die Lagerachse 8 auch nach unten bewegt wird, wird infolge der Schrägstellung der Nut 30 auch der hintere Teil des Arbeitsbackens 9 nach unten geführt, so daß er ständig parallel zum zweiten Arbeitsbacken 10 verbleibt, bei dem dieses Führungsprinzip ebenfalls angewandt wird. Zu diesem Zweck wird auf die gestrichelte Darstellung einer entsprechenden Führungsplatte 32 mit Führungsnut 33 verwiesen, die sich zum hinteren Zangenende hin nach links unten in Figur 2 öffnet. In diese Führungsnut greift eine Führungsachse 34 ein, die am zweiten Handgriff 3 befestigt ist bzw. diesen durchsetzt. Die Befestigung der Führungsplatte 32 an der Innenseite der Seitenwand 10a erfolgt in der gleichen Weise wie die Befestigung der Führungsplatte 24. Hierzu sind Durchgangsöffnungen 35 und 36 im Arbeitsbacken 10 vorgesehen. Eine entsprechende und hier nicht zu erkennende Führungsplatte befindet sich an der gegenüberliegenden Innenseite der Seitenwand 10b des zweiten Arbeitsbackens 10.

Die Figur 2 läßt außerdem den Aufbau des oberen Teils der Abisolierstation 11 im einzelnen erkennen.

Zu sehen sind die beiden Halteblöcke 12, 13 und die ihnen jeweils zugeordneten Kippachsen 20, 21. Der Halteblock 12 ist um die Kippachse 21 schwenkbar, wozu er zwei im Abstand voneinander liegende Bügel 37, 38 aufweist, die seitlich über ihn hinausstehen und die Kippachse 21 umgreifen. Die Bügel 37, 38 sind an der oberen Kante einstückig mit dem Halteblock 12 verbunden und so abgewinkelt, daß sie über den zweiten Halteblock 13 hinweglaufen. Die Kippachse 21 liegt an der dem Halteblock 12 abgewandten Seite des Halteblocks 13. Für den Halteblock 13 gilt hinsichtlich der Kippachse 20 entsprechendes. Auch der Halteblock 13 weist zwei an seiner oberen Seite mit ihm verbundene Bügel 39 und 40 auf, die im vorliegenden Fall nach links abgewinkelt sind und die Kippachse 20 umgreifen. Dabei laufen die Bügel 39 und 40 über den Halteblock 12 hinweg. Die Kippachse 20 liegt an der dem Halteblock 13 abgewandten Seite des Halteblocks 12.

Für den unteren Aufbau der Abisolierstation, also für die Halteblöcke 14 und 15 und die zugeordneten Kippachsen 23 und 22 gilt entsprechendes. Sowohl die obere Baugruppe als auch die untere Baugruppe der Abisolierstation 11 können identisch ausgebildet sein, was Form bzw. Geometrie angeht. Hiervon können lediglich die von den Halteblöcken getragenen Elemente eine Ausnahme machen, also im vorliegenden Fall die Abisoliermesser 16 bis 19. Sie sind mit Hilfe von Stiften oder Schrauben, die die Halteblöcke durchsetzen, an diesen befestigt. Die Stifte bzw. Schrauben tragen hier das gemeinsame Bezugszeichen 41.

Befindet sich die Zange in der In Figur 2 gezeigten Stellung, ist also das Zangenmaul offen, so liegen auch die oberen Halteblöcke 12, 13 im Abstand zu den unteren Haltblöcken 14, 15. Dagegen liegen die Haltblöcke 12, 13 eng aneinander an und auch die Halteblöcke 14 und 15, was bedeutet, daß die Abisoliermesser 16 und 17 eng aneinander anliegen sowie auch die Abisoliermesser 18 und 19, um jeweils eine gemeinsame Schneidkante zu bilden. Damit die Halteblöcke 12, 13 einerseits und die Halteblöcke 14, 15 andererseits eng aneinander anliegen können bzw. gegeneinander gedrückt werden, befinden sich in den Bügeln 38 und 39 Sacklöcher 45, 44 zur Aufnahme von Druckfedern, die hier nicht gezeigt sind.

Diese Druckfedern stützen sich an der oberen Innenfläche des ersten Arbeitsbackens 9 ab und drücken den Halteblock 12 entgegen dem Uhrzeigersinn um die Kippachse 21 sowie den Halteblock 13 im Uhrzeigersinn um die Kippachse 20, so daß sie gegeneinander schlagen. Damit die Abisoliermesser in der Zangenebene zu liegen kommen, wird die Stellung der Halteblöcke 12, 13 arretiert, und zwar durch einen Zentrierstift 42, der ebenfalls an der oberen Fläche des ersten Arbeitsbackens 9 befestigt ist und ins Innere dieses Arbeitsbackens ragt bis hinein in einen Bereich, der zwischen den Halteblöcken 12, 13 liegt. Zur Aufnahme des Zentrierstifts 42 weisen daher die Halteblöcke 12, 13 an ihren gegenüberliegenden Seiten eine entsprechende Ausnehmung auf. Sie trägt das Bezugszeichen 43. Der Zentrierstift 42 dient mit anderen Worten als Anschlag für die Halteblöcke 12, 13.

Ein identischer Aufbau ist vorgesehen, um die Halteblöcke 14, 15 im zweiten Arbeitsbacken 10 zu zentrieren. Auch hier werden die Halteblöcke 14, 15 mit Hilfe von nicht dargestellten Federn entsprechend der zuvor beschriebenen Weise gegeneinander gedrückt.

Nach einer Ausgestaltung der Erfindung kann vorgesehen sein, die jeweiligen Abisoliermesser 16 bis 19 auch um eine Achse justierbar einstellen bzw. verdrehen zu können, die senkrecht zur Zangenebene liegt. Dadurch könnte eine Fehlparallelisierung der Arbeitsbacken infolge von Werkstoffelastizitäten beim Betrieb der Zange ausgeglichen werden.

Es sei noch erwähnt, daß nicht unbedingt jeder der Halteblöcke ein Abisoliermesser aufnehmen muß. Beispielsweise wäre es möglich, nur die Halteblöcke 12 und 14 mit Abisoliermessern auszustatten, während in den Halteblöcken 13 und 15 Klemmbalken (nicht dargestellt) positioniert werden, die lediglich zum Halten bzw. Festklemmen eines Leiters im Zangenmaul dienen. Das Durchschneiden einer Leiterisolation würde dann von den Abisoliermessern 16 und 18 übernommen werden.

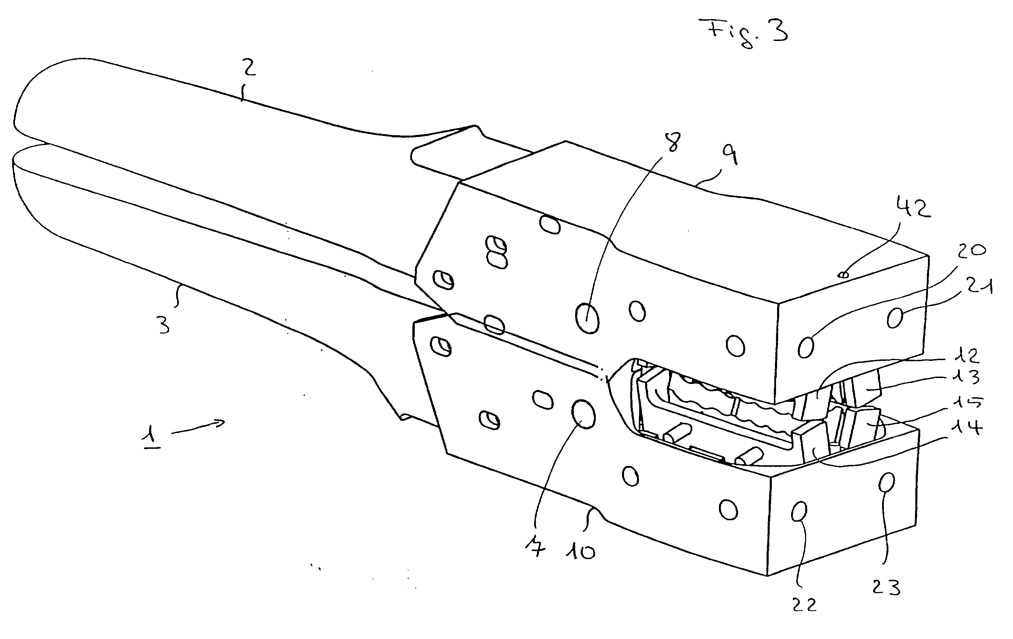

Die Figur 3 zeigt die erfindungsgemäße Zange 1 in geschlossener Stellung.

Hier sind die Handgriffe 2 und 3 zusammengedrückt und die Arbeitsbacken 9 und 10 so weit parallel aufeinander zu verschoben, daß die Halteblöcke 12, 13, 14 und 15 aus ihrer Ruhelage herausgeschwenkt sind. Dabei sind die Halteblöcke 12, 14 einerseits und 13, 15 andererseits jeweils mit ihren aufeinanderzuweisenden Endkanten gegeneinander gelaufen und haben sich infolgedessen verkippt.

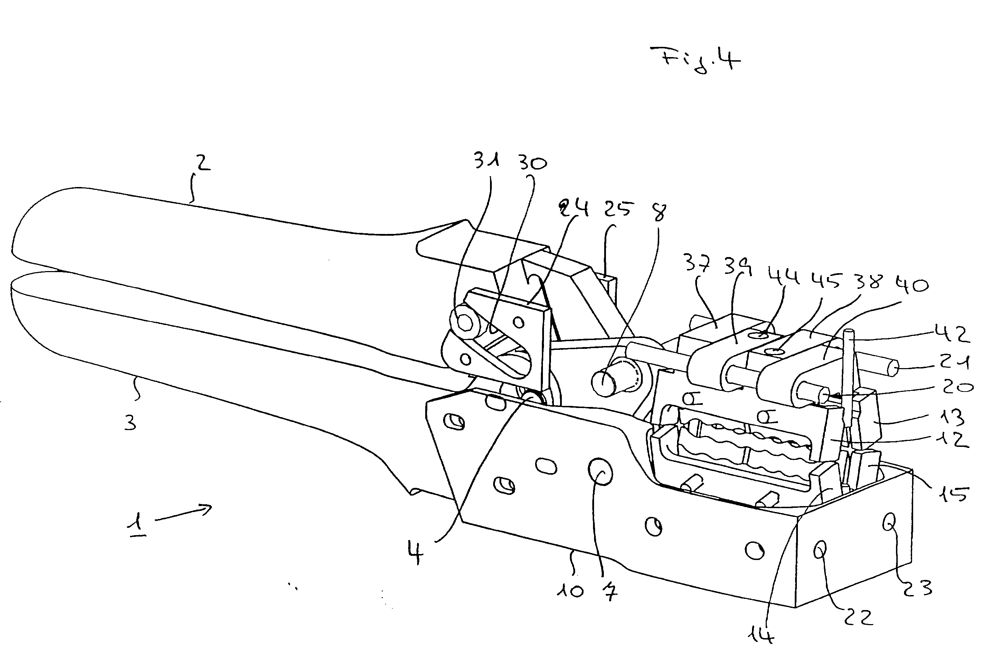

Die Figur 4 zeigt die Zange 1 in geschlossenem Zustand bei abgenommenem ersten Arbeitsbacken 9.

In diesem geschlossenen Zangenzustand sind die Arbeitsbacken 9, 10 am weitesten zum vorderen Zangenende hin verschoben, da die Lagerachsen 7, 8 ihre am weitesten vorn liegende Position einnehmen, und zwar bezogen auf die gemeinsame Drehachse 4. Auch die Führungsplatten 24, 25 bzw. 32 liegen am weitesten vorn, so daß die Führungsachse 31 am hinteren Ende der Nut 30 zu liegen kommt.

Infolge des Gegeneinanderlaufens der Halteblöcke 12 und 14 bzw. 13 und 15 sind diese um ihre jeweiligen Kippachsen verdreht worden, und zwar der Halteblock 12 im Uhrzeigersinn um die Achse 21, der Halteblock 13 entgegen dem Uhrzeigersinn um die Kippachse 20, der Halteblock 14 entgegen dem Uhrzeigersinn um die Kippachse 23 und der Halteblock 15 im Uhrzeigersinn um die Kippachse 22. Durch das Verkippen der Haltblöcke in diese Stellung werden die bereits erwähnten Druckfedern vorgespannt bzw. komprimiert, die sich in den Ausnehmungen 44 und 45 an der oberen Seite der Bügel 37, 38 befinden und sich an der inneren Fläche der oberen Wand des ersten Arbeitsbackens 9 abstützen. Entsprechendes gilt für die jeweiligen Druckfedern im unteren Arbeitsbacken 10.

Werden die Handgriffe 2 und 3 wieder entlastet, bewegt sich die Lagerachse 8 entgegen dem Uhrzeigersinn um die gemeinsame Achse 4, während sich die Lagerachse 7 im Uhrzeigersinn um die gemeinsame Achse 4 dreht. Die Arbeitsbacken 9, 10 werden dadurch wieder zum Zangenende hin verschoben und voneinander getrennt, und zwar infolge der Bewegung der Lagerachsen 7, 8 sowie infolge der Führung der Führungsachse 31 in der Führungsnut 30 sowie der Führung der Führungsachse 34 in der Führungsnut 33.

Da die Halteblöcke wieder außer Kontakt miteinander kommen, werden sie jetzt über die in den Öffnungen 44 und 45 befindlichen Druckfedern wieder in ihre Ausgangsstellung gedreht, bis sie gegen den Zentrierstift 42 im Arbeitsbacken 9 bzw. einen entsprechenden Zentrierstift im Arbeitsbacken 10 schlagen.

Die Figur 5 zeigt ein innerhalb der Abisolierstation 11 liegendes Flachkabel 46, wobei die restlichen Teile der Zange der Übersicht wegen fortgelassen sind. Das Zangenmaul ist hier geschlossen und es sind die Abisoliermesser 16, 17 bzw. 18, 19 um ihre jeweiligen Achsen 20, 21, 22 und 23 gekippt. Durch diesen Kippvorgang kann ein durchtrenntes Isolationsende nicht nur abgeschoben werden, sondern es können auch noch nicht vollständig durchtrennte kleinere Bereiche der Leiterisolation zerrissen werden.

Es sei darauf hingewiesen, daß sowohl die beiden Handgriffe 2, 3 als auch die beiden Arbeitsbacken 9, 10 und nicht zuletzt die Abisolierstation 11 mit Ausnahme ggf. der Abisoliermesser vollständig identisch in Form bzw. Geometrie aufgebaut sein können. Die Zange ist daher besonders einfach und kostengünstig herstellbar.

## Patentansprüche

1. Zange (1) zum Bearbeiten von strangförmigem Gut (46), mit einem ersten Handgriff (2) und einem zweiten Handgriff (3), die um eine gemeinsame Achse (4) relativ zueinander verschwenkbar sind, sowie mit einem ersten Arbeitsbacken (9) und einem zweiten Arbeitsbacken (10), die bei Verschwenkung der Handgriffe (2, 3) entsprechend aufeinander zu oder voneinander weg bewegbar sind, **dadurch gekennzeichnet,** daß ein jeweiliger der Arbeitsbacken (9, 10) sowohl am ersten als auch am zweiten Handgriff (2, 3) so gelagert ist, daß beide Arbeitsbacken (9, 10) beijeder Verschwenkstellung der Handgriffe (2, 3) parallel zueinander stehen.

2. Zange nach Anspruch 1, **dadurch gekennzeichnet,** daß die jeweiligen Handgriffe (2, 3) einen die gemeinsame Achse (4) in Richtung zum vorderen Zangenende hin überragenden und zum jeweils anderen Handgriff weisenden Lagerabschnitt (5, 6) besitzen, und daß jeder der Arbeitsbacken (9, 10) an jeweils einem solchen Lagerabschnitt sowie am anderen Handgriff in einem Bereich gelagert ist, der an der zum hinteren Zangenende weisenden Seite des genannten Lagerabschnitts liegt.

3. Zange nach Anspruch 2, **dadurch gekennzeichnet,** daß der jeweilige Arbeitsbacken () am Lagerabschnitt () schwenkbar und am anderen Handgriff gleitend verschiebbar gelagert ist.

4. Zange nach Anspruch 3, **dadurch gekennzeichnet,** daß zur schwenkbaren Lagerung eines Arbeitsbackens (9, 10) der jeweilige Lagerabschnitt (6, 5) eine senkrecht zur Zangenebene liegende Lagerachse (8, 7) trägt.

5. Zange nach Anspruch 3, **dadurch gekennzeichnet,** daß zur gleitenden Verschiebbarkeit eines jeweiligen Arbeitsbackens (9, 10) der genannte andere Handgriff wenigstens sich senkrecht zur Zangenebene erstreckende Ansätze (31, 34) aufweist, die in Längsnuten (30, 33) verlaufen, welche sich innen an diesen anderen Handgriff übergreifenden Seitenwänden (9a, 9b; 10a, 10b) des Arbeitsbackens (9, 10) befinden.

6. Zange nach Anspruch 5, **dadurch gekennzeichnet,** daß die Längsnuten (30, 33) in Platten (24, 25; 32) verlaufen, die innen an den Seitenwänden der Arbeitsbacken (9, 10) befestigt sind.

7. Zange nach einem der Ansprüche 1 bis 6, **dadurch gekennzeichnet,** daß die Arbeitsbacken (9, 10) im vorderen Zangenbereich an einander gegenüberliegenden Abschnitten Bearbeitungswerkzeug (11) tragen.

8. Zange nach Anspruch 7, **dadurch gekennzeichnet,** daß durch das Bearbeitungswerkzeug eine Schneidstation mit wenigstens einem Schneidmesser gebildet ist, das sich in Zangenlängsrichtung erstreckt.

9. Zange nach Anspruch 7, **dadurch gekennzeichnet,** daß durch das Bearbeitungswerkzeug eine Crimpstation mit Crimpstempeln gebildet ist, die sich in Zangenlängsrichtung erstrecken bzw. in dieser nebeneinander liegen.

10. Zange nach Anspruch 7, **dadurch gekennzeichnet,** daß durch das Bearbeitungswerkzeug eine Abisolierstation (11) mit aufeinander zu bewegbaren Abisoliermessern (16, 17, 18, 19) gebildet ist, die sich in Zangenlängsrichtung erstrecken.

11. Zange nach Anspruch 10 **dadurch gekennzeichnet,** daß zur Bildung der Abisolierstation (11) jeder Arbeitsbacken (9, 10) zwei parallel zueinander verlaufende und aneinander liegende Abisoliermesser (16, 17; 18, 19) trägt, deren Messerschneiden sich bei Belastung voneinander entfernen.

12. Zange nach Anspruch 10, **dadurch gekennzeichnet,** daß zur Bildung der Abisolierstation (11) jeder Arbeitsbacken (9, 10) ein Abisoliermesser (16; 18) und einen parallel dazu liegenden Klemmbalken trägt, derart, daß sich die Klemmbalken der beiden Arbeitsbacken (9, 10) gegenüberliegen, und daß sich eine pro Arbeitsbacken vorhandene Messerschneide des Abisoliermessers (16; 18) und eine Klemmfläche des Klemmbalkens bei Belastung voneinander entfernen.

13. Zange nach Anspruch 11 oder 12, **dadurch gekennzeichnet,** daß die Abisoliermesser (16, 17; 18, 19) bzw. Klemmbalken um jeweils eine parallel zu ihnen verlaufende Kippachse (21, 20; 23, 22) drehbar gelagert sind.

14. Zange nach Anspruch 13, **dadurch gekennzeichnet,** daß die Abisoliermesser bzw. Klemmbalken jeweils in einem Halteblock (12 - 15) herausnehmbar gehalten sind, und daß die Halteblöcke (12 - 15) um die Kippachsen (20 - 23) drehbar gelagert sind.

15. Zange nach Anspruch 13 oder 14, **dadurch gekennzeichnet,** daß die Kippachsen (20 - 23) an in Zangenlängsrichtung vorderen und hinteren Bereichen der Arbeitsbacken (9, 10) gelagert sind.

16. Zange nach Anspruch 13, 14 oder 15, **dadurch gekennzeichnet,** daß zwischen den pro Arbeitsbacken (9, 10) vorhandenen Elementen Abisoliermesser, Klemmbalken oder Halteblöcke einerseits und den zugehörigen Kippachsen (20 - 23) andererseits eine Überkreuz-Zuordnung besteht.

17. Zange nach Anspruch 16, **dadurch gekennzeichnet,** daß die pro Arbeitsbacken (9, 10) vorhandenen Elemente Abisoliermesser, Klemmbalken oder Halteblöcke durch Federkraft so vorgespannt sind, daß sie gegeneinander gedrückt werden.

18. Zange nach Anspruch 17, **dadurch gekennzeichnet,** daß am jeweiligen Arbeitsbacken (9, 10) ein Zentrierstift (42) befestigt ist, der zur Positionierung der Elemente Abisoliermesser, Klemmbalken oder Halteblöcke in ihrer Ausgangsposition dient.

19. Zange nach einem der Ansprüche 7 bis 18, **dadurch gekennzeichnet,** daß das Bearbeitungswerkzeug um eine Achse justierbar ist, die senkrecht zur Zangenebene verläuft.

20. Zange nach einem der Ansprüche 1 bis 19, **dadurch gekennzeichnet,** daß wenigstens der erste und der zweite Handgriff (2, 3) eine identische Form aufweisen.

21. Zange nach Anspruch 20, **dadurch gekennzeichnet,** daß auch die Arbeitsbacken (9, 10) ein identische Form aufweisen.

22. Zange nach einem der Ansprüche 10 bis 21, **dadurch gekennzeichnet,** daß die Abisolierstation (11) aus vier identisch aufgebauten Baugruppen besteht, mit denen Abisoliermesser (16 - 19) bzw. Klemmbalken verbindbar sind.

23. Zange (1) zur Bearbeitung von Gegenständen, mit einem ersten Handgriff (2) und einem zweiten Handgriff (3), die relativ zueinander verschwenkbar sind, sowie mit einem ersten Arbeitsbacken (9) und einem zweiten Arbeitsbacken (10), die bei Verschwenkung der Handgriffe entsprechend aufeinander zu oder voneinander weg bewegbar sind, **dadurch gekennzeichnet,** daß wenigstens die Handgriffe (2, 3) in ihrer Form bzw. Geometrie identisch ausgebildet sind.

24. Zange nach Anspruch 23, **dadurch gekennzeichnet,** daß auch die Arbeitsbalken (9, 10) in ihrer Form bzw. Geometrie identisch ausgebildet sind.

25. Zange nach Anspruch 23 oder 24, **dadurch gekennzeichnet,** daß für die jeweiligen Arbeitsbacken (9, 10) vorgesehene Halteeinrichtungen (12 - 15, 20 - 23) zum Halten von Bearbeitungselementen (16 - 19) in ihrer Form bzw. Geometrie identisch ausgebildet sind.
